(19) Europäisches Patentamt
European Patent Office
Office européen des brevets

(11) **EP 0 735 966 B1**

(12) **EUROPÄISCHE PATENTSCHRIFT**

(45) Veröffentlichungstag und Bekanntmachung des Hinweises auf die Patenterteilung:
**30.07.1997 Patentblatt 1997/31**

(21) Anmeldenummer: 95901325.1

(22) Anmeldetag: **19.11.1994**

(51) Int. Cl.$^6$: **B62M 23/02**, B62K 11/04

(86) Internationale Anmeldenummer:
**PCT/DE94/01385**

(87) Internationale Veröffentlichungsnummer:
**WO 95/17330 (29.06.1995 Gazette 1995/27)**

(54) **FAHRRAD MIT HYBRIDANTRIEB**

BICYCLE WITH HYBRID DRIVE

BICYCLETTE A ENTRAINEMENT HYBRIDE

(84) Benannte Vertragsstaaten:
**AT BE CH DK FR LI NL**

(30) Priorität: **23.12.1993 DE 4344008**

(43) Veröffentlichungstag der Anmeldung:
**09.10.1996 Patentblatt 1996/41**

(73) Patentinhaber: **ITG ENGINEERING GmbH ZSCHOPAU**
**D-09405 Zschopau (DE)**

(72) Erfinder:
• **BREDEL, Eberhard**
**D-09405 Zschopau (DE)**
• **HUNGER, Steffen**
**D-09437 Börnichen (DE)**

• **AUERBACH, Dankmar**
**D-09437 Börnichen (DE)**
• **GÜNTHER, Maik**
**D-09419 Jahnsbach (DE)**
• **KÖHLER, Andre**
**D-09432 Grossolbersdorf (DE)**

(74) Vertreter: **Wystemp, Gerd, Dipl.-Ing.**
**Hans-Sachs-Strasse 17**
**09126 Chemnitz (DE)**

(56) Entgegenhaltungen:
EP-A- 0 060 568      EP-A- 0 079 573
FR-A- 1 212 125      FR-A- 2 302 231
FR-A- 2 316 114      FR-A- 2 490 578

## Beschreibung

### Technisches Gebiet

Die Erfindung betrifft ein Fahrrad mit Hybridantrieb mittels von Muskelkraft betätigter Pedale und eines elektronisch kommutierten Gleichstrommotors, bei Einwirkung auf eine gemeinsame Antriebskette.Der Gleichstrommotor ist im Bereich zwischen dem Sattelrohr des Fahrrades und dem Hinterrad, auf einer als Schwinge ausgebildeten Hinterradgabel angeordnet.

### Stand der Technik

In der DE-OS 3 144 884 ist eine derartige Lösung vorgeschlagen worden. Danach sind die beiden Hinterradgabelrohre der Hinterradgabel als feste bauliche Einheit um die Achse des Drehlagergehäuses schwenkbar gelagert. In einem Abstand zur Schwenklagerung sind die beiden Hinterradgabelrohre durch die Quertraverse miteinander verbunden, an der der Elektromotor befestigt ist. Diese Lösung sieht ferner vor, daß die Quertraverse als Rohr ausgebildet ist, das den Elektromotor aufnimmt. Die Reduzierung der Drehzahl des Elektromotors erfolgt mittels eines Getriebes, das an einem der Hinterradgabelrohre angeordnet ist. Dazu ist der Elektromotor mit einem Stirnrad versehen, das seitlich über eine Hinterradgabel hinaus vorsteht und mit einem an dieser Hinterradgabel gelagerten Zahnrad größeren Durchmessers kämmt, das mit einem Kettenrad für den Kettenantrieb des Kettenrades an der Hinterradnabe verbunden ist.

In abgewandelter Weise ist die vorstehend beschriebene Lösung in dem EP 0 079 573 nochmals dargestellt worden.

Danach ist der Elektromotor in einem Rohr gelagert, das mit einer koaxial zur Motorachse liegenden Achse quer zum Rahmen zwischen Hinterrad und Tretlagergehäuse nahe letzterem angeordnet ist, und das Rohr die hinteren Gabelhälften des Rahmens verbindet, die Motorkupplung ein sperrbarer Freilauf ist und der Elektromotor das ihm zugeordnete Kettenrad über ein Stirnraduntersetzungsgetriebe antreibt, dessen Räder an einem der Hinterradgabelrohre im nahen Bereich des Tretlagers miteinander durch eine Traverse verbunden sind, die in Gestalt eines Rohres ausgebildet ist und durch Schweißungen die Hinterradgabelrohre verbindet. In diesem Rohr ist der Elektromotor angeordnet, der ein nach außen aus dem Gabelrohr vorstehendes Zahnrad hat, das mit einem Zahnrad kämmt, das in einem Lager am Gabelrohr gelagert ist.

Die vorstehend beschriebene Lösung ist in verschiedener Hinsicht mit Nachteilen behaftet. Die Anordnung des Getriebes an einem der Hinterradgabelrohre führt zu Stabilitäts- und Festigkeitsproblemen der Hinterradgabel und Störungen bei der Kraftübertragung.

Außerdem ist das Anbringen der Lagersitze, gegebenenfalls auch Gegenlagerstellen, unter Beachtung der einzuhaltenden genauen Toleranzen aufwendig und teuer.

Im Bereich der Anordnung der Zahnräder muß das Hinterradgabelrohr zweckentsprechend ausgebildet sein und bedarf einer entsprechenden Bearbeitung um die Lagersitze beidseitig aufnehmen und das Getriebe paßgerecht zu dem Elektromotor und dem Fahrradantrieb aufnehmen zu können. Außerdem hat sich herausgestellt, daß gerade im übergangsbereich zwischen dem in üblicher Weise gestalteten Querschnitt des Hintergabelrohres und dem Bereich, in dem das Getriebe an dem Hintergabelrohr angeordnet ist, eine ausgesprochene kritische Stelle hinsichtlich der Verwindung der Hintergabel besteht. Das nachträglich paßgerechte Einbringen des Zentriersitzes des Elektromotors in dem Querschnitt ist gleichfalls aufwendig und teuer.

### Darstellung der Erfindung

Das Problem der Erfindung besteht darin, ein Fahrrad mit Hybridantrieb mit einer als Schwinge ausgebildeten Hinterradgabel der beschriebenen Gattung nachzuweisen, die bei geringem Herstellungsaufwand und -kosten, Funktionsfähigkeit insbesondere hinsichtlich der Kraftübertragungselemente und den erhöhten Ansprüchen an Steifigkeit und Festigkeit entspricht.

Das Problem wird durch das in Anspruch 1 angegebene erfindungsgemäße Fahrrad gelöst. Durch Aufnahme des Gleichstrommotors in das Getriebegehäuse können jegliche Störungen der Kraftübertragung vermieden werden. Aufwendige, Kosten verursachende Bearbeitungen der Hinterradgabelrohre und des Querrohres, welche die Getriebelagersitze bzw. den Elektromotor aufnehmen, entfallen.

Dadurch, daß das Getriebegehäuse einerseits verwindungsfrei am Rahmen des Fahrrades schwenkbar angelenkt, andererseits infolge entsprechender Ausbildung verwindungsfrei mit den Gabelholmen verbunden ist, wird die erforderliche erhöhte Festigkeit gewährleistet.

Eine vorteilhafte Ausgestaltung der Erfindung ist darin zu sehen, daß das Getriebegehause als Aluminiumguß- oder Schweißteil mit im Inneren angeordnetem Zentriersitz für den Gleichstrommotor und Lagersitzen für die Getriebewellen sowie beidseitig lösbar anbringbaren Gehäusedeckeln ausgeführt ist.Dadurch wird eine kostengünstigere Serienfertigung ermöglicht.

Platz-, material- und aufwandsparend sowie funktionssicher hat sich eine weitere Ausgestaltung der Erfindung herausgestellt, nach der der Gleichstrommotor quer zur Längsachse des Getriebegehäuse und des Fahrrades angeordnet ist und das Getriebe als Zahnriemengetriebe ausgebildet ist. Durch Anordnung von zwei Lagerböcken mit Lagern zum schwenkbaren Anlenken am Rahmen des Fahrrades tretlagerseitig am äußeren Getriebegehäuse, symmetrisch zur Längsachse des Getriebegehäuses, wird eine hohe Verwindungssteifigkeit erreicht. Zweckmäßigerweise sind bei Gußausführung die Lagerböcke Bestandteile des gegossenen Getriebegehäuses.

Eine weitere Ausgestaltung der Erfindung sieht hinterradseitig am äußeren Getriebegehäuse Zentrierelemente für die Gabelholme der Hinterradgabel vor. Dadurch wird die Verbindung zwischen dem Getriebegehäuse und den Gabelholmen fertigungsseitig vereinfacht und die Festigkeit der Verbindung, beispielsweise einer Schweißverbindung, erhöht.

Das insbesondere dann, wenn die Gabelholme entsprechend einer weiteren Ausgestaltung der Erfindung als Blechprägeteile ausgeführt werden, eine an ihren beiden offenen Enden während des Fertigungsprozesses gleichzeitig form- und maßgerecht getriebegehäuseseitig zur Aufnahme der Zentrierelemente des Getriebegehäuses und hinterradseitig zur Aufnahme von Zentrierelementen der Radeinhängungen, die zweckmäßigerweise in gleicher Weise fest miteinander verbunden werden, ausgebildet sind.

Auch darin ist eine vorteilhafte Ausgestaltung der Erfindung zu sehen, daß in einer Einkerbung des Sattelrohres eine Sitzplatte mit einer Gewindebohrung befestigt ist,in welche ein Gewindestift,der in das als Gummifeder ausgebildete Federelement einvulkanisiert ist,einschraubbar ist.

Dadurch wird auf einfache kostengünstige Weise die Abfederung der als Schwinge ausgebildeten Hinterradgabel gewährleistet, ohne deren Funktion und Verwindungssteife und Festigkeit negativ zu beeinflusssen.

Kurze Beschreibung der Zeichnungen

Fig.1:   Fahrrad mit Hybridantrieb in Seitenansicht
Fig.2:   Hinterradschwinge in Seitenansicht, teilweise geschnitten dargestellt,
Fig.3:   das Getriebegehäuse in Schnittdarstellung.

Bester Weg zur Ausführung der Erfindung

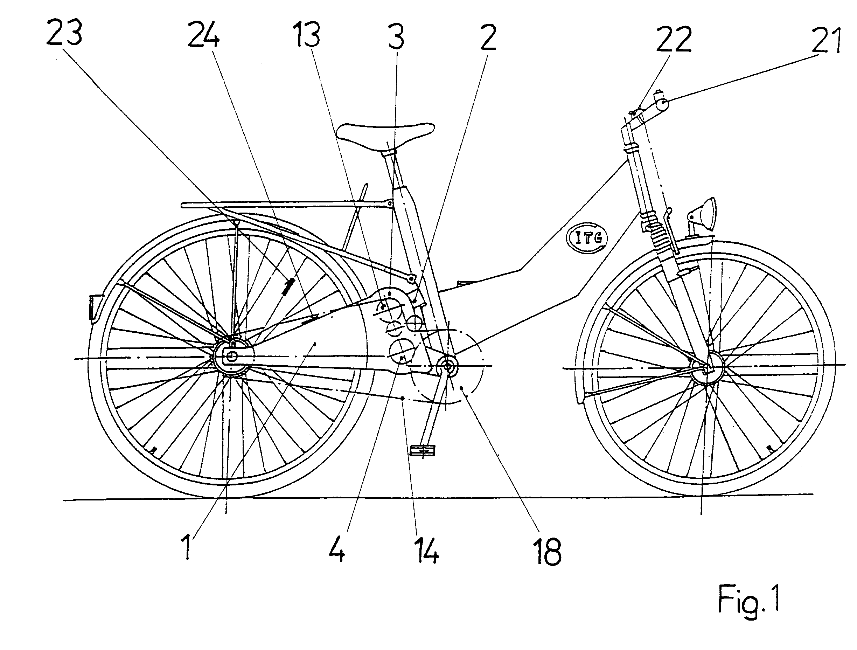

In Fig. 1 ist ein Fahrrad mit Hybridantrieb mittels von Muskelkraft betätigter Pedale über das Kettenblatt 18 und eines elektronisch kommutierten Gleichstrommotors 4 über den Freilauf 13 gezeigt. Beide Antriebe wirken auf eine gemeinsame Antriebskette 14. Am Lenker des Fahrrades ist der Hauptschalter 22 für das elektrische System sowie der Drehgriff mit Potentiometer 21 für die Einstellung der Geschwindigkeit des vom Gleichstrommotor 4 angetriebenen Fahrrades angeordnet. Über den Hauptschalter 22 wird das elektrische System zugeschaltet.Danach kann über den Drehgriff mit Potentiometer 21 die gewünschte Motorkraft eingestellt werden. Der elektrische Antrieb wird jedoch erst wirksam,wenn sich das Fahrrad mit einer Geschwindigkeit von etwa 5 km/h bewegt. Das wird über den Speichenmagneten 23 und den Sensor für Geschwindigkeitsabnahme 24 realisiert. Letzterer gibt die Signale an die Motorsteuerung weiter und diese schaltet den Gleichstrommotor 4 bei etwa 5 km/h zu, wenn der Hauptschalter 22 eingeschaltet ist und am Drehgriff mit Potentiometer 21 die gewünschte Leistung eingestellt wurde. Weiterhin wird über den Speichenmagneten 23 und Sensor für Geschwindigkeitsabnahme 24 die Abschaltung des elektrischen Antriebes bei etwa 25 km/h veranlaßt. Mit höherer Geschwindigkeit kann ausschließlich mit Pedalantrieb gefahren werden.

Die Hinterradgabel 1 ist als am Rahmen des Fahrrades angelenkte und mit dem Getriebegehäuse 3 über ein Federelement 2 am Sattelrohr 25 abgefederte Schwinge ausgebildet.

Der Speichenmagnet 23 ist an einer Speiche des Hinterrades angebracht und der Sensor für Geschwindigkeitsabnahme 24 an der Hinterradgabel 1.

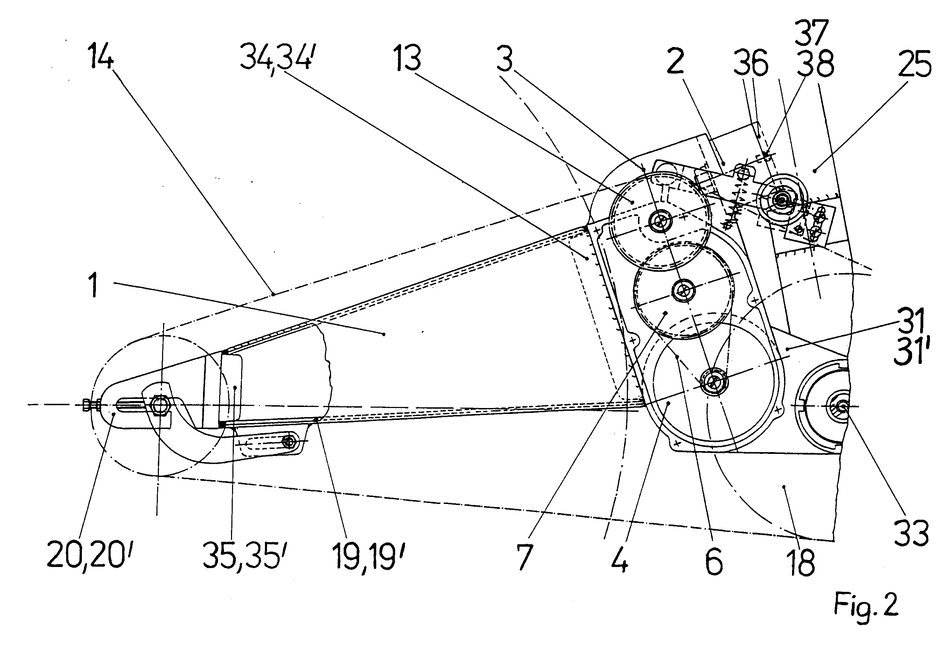

Fig. 2 zeigt die Hinterradgabel 1 im Detail.Sie besteht aus den Gabelholmen 19;19' und dem Getriebegehäuse 3.Die Gabelholme 19;19' sind aus zweiteilig zusammengesetzten und zu Kastenprofilen verschweißten Blechen hergestellt.An ihren Enden sind sie in ihren Abmessungen und ihrer Form vorbereitet für die Aufnahme der Zentrierelemente 34;34',die am äußeren Getriebegehäuse 3 angebracht sind , und der Zentrierelemente 35;35' der Radeinhängungen 20;20' des Hinterrades.

Das vereinfacht die Herstellung der Schweißverbindungen der Gabelholme 19;19' mit dem Getriebegehäuse 3 und den Radeinhängungen 20;20' und ergibt unterstützend eine feste Verbindung und in deren Ergebnis eine verwindungsarme, stabile Hinterradgabel 1.

Von erheblichem Vorteil ist ferner,daß die Gabelholme 19;19' beziehungsweise die Hinterradgabel 1 keiner Bearbeitung wie Anbringung von Lagersitzen zur Anbringung von Getriebeelementen und des Gleichstrommotors 4 bedürfen. Die Festigkeit der als Schwinge ausgebildeten Hinterradgabel 1 wird auch dadurch erhöht, daß ihre Anlenkung am Rahmen des Fahrrades in der Achse 33 des Kettenblattes 18 zu beiden Seiten des Tretlagers mittels zweier Lagerböcke 31;31' erfolgt, die am äußeren Getriebegehäuse 3 angeordnet, fest und verwindungssteif mit diesem verbunden sind. In gleichem Sinne vorteilhaft erfolgt die Abfederung der Hinterradgabel 1 gegenüber dem Rahmen des Fahrrades. Zwischen dem Getriebegehäuse 3 und dem Sattelrohr 25 ist ein als Gummifeder ausgebildetes Federelement 2 ange ordnet Dazu ist in einer im Sattelrohr 25 eingefrästen Kerbe eine Sitzplatte 36 mit einer Gewindebohrung 37 angebracht, in welche der in die Gummifeder einvulkanisierte Gewindestift 38 eingeschraubt wird. Das Federelement 2 ist leicht und schnell gegen eines mit einer anderen Federkennlinie austauschbar.

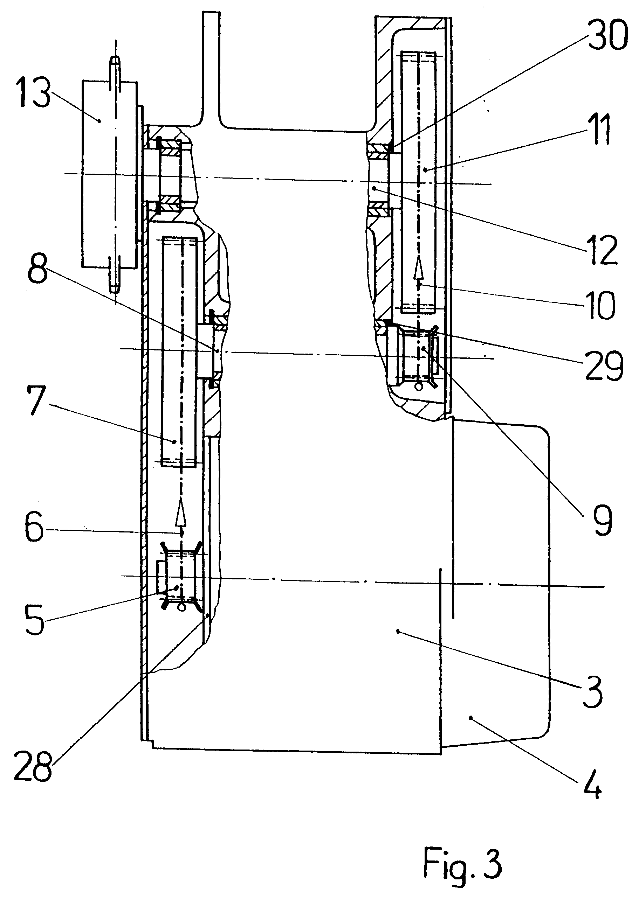

In Fig. 3 ist das Getriebegehäuse 3 dargestellt, welches in einem Zentriersitz 28 auch den Gleichstrommotor 4 aufnimmt, dessen Achse quer zur Längsachse des Getriebegehäuses 3 und des Fahrrades angeordnet ist. Es wird ein elektronisch kommutierter Gleichstrommotor 4 mit den Leistungsdaten I = 24 V ; n = 4000 U/min und P = 170 W verwendet. Das Getriebe ist als Zahnriemengetriebe ausgebildet. Auf der Welle des Gleichstrommotors 4 sitzt die kleine Antriebsriemenscheibe 5 mit sechzehn Zähnen. Sie treibt über den Antriebszahnriemen 6 die große Antriebsriemenscheibe 7 mit achtzig Zähnen. Deren Zwischenwelle 8 ist in üblicher Weise in Lagersitzen 29;29' im Getriebegehäuse 3 kugelgelagert. Am anderen Ende der Zwischen- welle 12 ist die kleine Antriebsriemenscheibe 9 mit sechzehn Zähnen angebracht, die über den Abtriebszahnriemen 10 die große Abtriebsriemenscheibe 11 mit zweiundsiebzig Zähnen treibt. Die Abtriebswelle 12 ist in analoger Weise wie die Zwischenwelle 8 in Kugellagern gelagert, die in Lagersitzen 30;30' im Getriebegehäuse 3 angeordnet sind.Am anderen Ende der Abtriebswelle 12 sitzt, außerhalb des mit Gehäusedeckeln 26;27 seitlich abgedeckten Getriebegehäuses 3 der Freilauf 13, der mit seinem Kettenrad in die Antriebskette 14 eingreift.

Gewerbliche Anwendbarkeit

Die Erfindung ist anwendbar bei Fahrrädern mit Hybridantrieb mittels von Muskelkraft betätigter Pedale und eines elektronisch kommutierten Gleichstrommotors 4.

**Patentansprüche**

1. Fahrrad mit Hybridantrieb mittels von Muskelkraft betätigter Pedale und eines elektronisch kommutierten Gleichstrommotors (4) bei Einwirkung auf eine gemeinsame Antriebs kette (14),wobei der Gleichstrommotor (4) im Bereich zwischen einem Sattelrohr (25) eines Rahmens des Fahrrades und einem Hinterrad auf einer als Schwinge ausgebildeten Hinterradgabel (1) befestigt, angeordnet ist, dadurch gekennzeichnet, daß der Gleichstrommotor (4) in ein Getriebegehäuse (3) eines Getriebes integriert ist, welches am Rahmen des Fahrrades schwenkbar angelenkt, mit zwei Gabelholmen (19;19') der Hinterradgabel (1) fest verbunden und an dem Sattelrohr (25) federnd abgestützt ist.

2. Fahrrad nach Anspruch 1, dadurch gekennzeichnet, daß das Getriebegehäuse (3) als Aluminiumguß- oder Schweißteil mit im Inneren angeordnetem Zentriersitz (28) für den Gleichstrommotor (4) und Lagersitzen für Getriebewellen (8;12) sowie beidseitig lösbar anbringbaren Gehäusedeckeln (26;27) ausgeführt ist.

3. Fahrrad nach den Ansprüchen 1 und 2, dadurch gekennzeichnet, daß der Gleichstrommotor (4) in dem Getriebegehäuse (3) quer zur Längsachse des Getriebegehäuses (3) angeordnet ist.

4. Fahrrad nach einem der Ansprüche 1 bis 3, dadurch gekennzeichnet, daß das Getriebe als Zahnriemenuntersetzungsgetriebe ausgebildet ist, umfassend eine auf der Welle des Gleichstrommotors (4) befestigte kleine Antriebsriemenscheibe (5),einen Antriebszahnriemen (6), der eine große Antriebsriemenscheibe (7) antreibt, auf deren Zwischenwelle (8) andererseits eine kleine Antriebsriemenscheibe (9) sitzt, die über einen Antriebszahnriemen (10) mit einer großen Antriebsriemenscheibe (11) in Wirkverbindung steht, deren Abtriebswelle (12) andererseits einen Freilauf (13) trägt, der in die Antriebskette (14) eingreift.

5. Fahrrad nach den Ansprüchen 1 und 2, dadurch gekennzeichnet, daß an dem Getriebegehäuse (3) außen tretlagerseitig symmetrisch zur Längsachse des Getriebegehäuses (3) zwei Lagerböcke (31;31') mit Lagern zum schwenkbaren Anlenken am Rahmen des Fahrrades angeordnet sind.

6. Fahrrad nach den Ansprüchen 1;2 und 5, dadurch gekennzeichnet, daß die Anlenkung in der Achse (33) eines Kettenblattes (18) zu beiden Seiten eines Tretlagers für den Antrieb des Fahrrades mittels Pedalen erfolgt.

7. Fahrrad nach den Ansprüchen 1;2 und 5, dadurch gekennzeichnet, daß am Getriebegehäuse (3) außen hinterradseitig Zentrierelemente (34;34') für die Gabelholme (19;19') der Hinterradgabel (1) angeordnet sind.

8. Fahrrad nach Anspruch 7, dadurch gekennzeichent, daß die Gabelholme (19;19') mit dem Getriebegehäuse (3) schweißverbunden sind.

9. Fahrrad nach den Ansprüchen 1;2;5;7 und 8, dadurch gekennzeichnet, daß die Gabelholme (19;19') Blechprägeteile, vorzugsweise zweiteilig zusammengesetzte Kastenprofile, sind, die getriebegehäuseseitig zur Aufnahme der Zentrierelemente (34;34') des Getriebegehäuses (3) und hinterradseitig zur Aufnahme von Zentrierelementen (35;35') von Radeinhängungen (20;20') ausgebildet sind.

10. Fahrrad nach Anspruch 9, dadurch gekennzeichnet, daß die Gabelholme (19;19') mit den Radeinhängungen (20;20') schweißverbunden sind.

11. Fahrrad nach Anspruch 1, dadurch gekennzeichnet, daß in einer Einkerbung des Sattelrohres (25) eine Sitzplatte (36) mit einer Gewindebohrung (37) befestigt ist, in welche ein Gewindestift (38), der in das als Gummifeder ausgebildete Federelement (2) einvulkanisiert ist, einschraubbar ist.

**Claims**

1. Bicycle with hybrid drive via muscle power operated pedals as well as electronically commutated DC-motor (4) actuating a common drive chain (14),whereby the DC-motor (4) is arranged in the area between a saddle tube (25) of the bicycle frame and a rear wheel mounted in bottom forks that form a swing arm,charakterized by a DC-motor (4) that has been integrated into a transmission casing (3),which is linked in a pivot point to the frame of the bicycle,rigidly connected to two fork members (19;19') of the bottom forks and supported by the saddle tube (25) via a spring.

2. Bicycle as per claim 1,characterized in that the transmission casing (3) executed as an aluminium casting or welding part,having an internal centering set (28) for the DC-motor (4) and bearing seats for the gear shafts (8;12) as well as detachable transmission covers (26;27) on either side.

3. Bicycle as per claims 1 and 2,characterized through the arrangement of the DC-motor (4) within the transmission housing (3) transversely to the longitudinal axis of the transmission casing (3).

4. Bicycle as per one of claims 1 to 3,characterized in that the transmission is designed as a timing belt reduction gearbox,comprising a pulley (5) mounted on the shaft of the DC-motor (4),a timing belt (6) driving a large toothed wheel (7) on whose countershaft (8) therenis a small pulley (9) fitted on the opposite side which - through a timing belt (10) - is driving a large pulley (11) that has a shaft (12) with a free wheel (13) fitted to the opposite end meshing with the drive chain (14).

5. Bicycle as per claims 1 and 2,characterized in that on the outside of the transmission casing (3),towards the bottom bracket bearing housing and symmetrically to the longitudinal axis, there are two bearing blocks (31;31') with bearing for pivoted linking to the bicycle frame.

6. Bicycle as per claims 1;2 and 5,characterized through linking the shaft (33) of the chain wheel (18) on either side of the bottom bracket bearing for actuating the bicycle through the pedals.

7. Bicycle as per claims 1;2 and 5,characterized by centering elements (34;34') for the fork members (19;19') of the bottom forks (1) arranged an the outside of the transmission casing (3) towards the rear wheel.

8. Bicycle as per claims 7,characterized through welding the fork members (19;19') to the transmission casing (3).

9. Bicycle as per claims 1;2;5;7 and 8,characterized in that the fork members (19;19') are stamped sheet metal parts,preferably two-sectional boax sections,which are designed to receive the transmission casing centering elements (34;34') for fitting of the transmission casing (3) and, towards the rear wheel, to receive the centering elements (35;35') of the wheel mountings (20;20').

10. Bicycle as per claim 9,characterized through welding the bottom forks members (19;19') to the wheel mountings (20;20').

11. Bicycle as per claims 1,characterized in that a bracket (36) is fitted in a notch of the saddle tube (25) and having a tapped hole (37) to receive a set srew (38) that is vulcanized into the spring element (2) made of a rubber spring.

**Revendications**

1. Bicyclette à entraînement hybride par l'intermédiaire de pédales actionnées par force musculaire et par l'intermédiaire d'un moteur à courant continu dont la commutation est faite électroniquement (4), agissant sur une chaîne d'entraînement commune (14), le moteur à courant continu (4) se trouvant fixé dans la zone entre un tube de selle (25) du cadre de la bicyclette et une roue arrière, et disposé sur une fourche arrière (1) sous forme de bras oscillant, caractérisée en ce que le moteur à courant continu (4) est intégré dans une boîte de vitesses (3) d'un engrenage que est lié de manière orientable au cadre de la bicyclette, solidairement fixé sur deux longerons (19; 19') de la fourche arrière (1) et appuyé de manière élastique par le tube de sel le (25).

2. Bicyclette selon la revendication 1, caractérisée en ce que la boîte de vitesses (3) est exécutée sous forme de pièce en fonte d'aluminium ou pièce soudée dotée d'une portée de centrage (28) disposée à l'intérieur et destinée au moteur à courant continu (4), de sièges de palier pour arbres de transmissions (8; 12), et de couvercles de boîte (26; 27) pouvant être montés sur les deux côtés de manière détachable.

3. Bicyclette selon les revendications 1 et 2, caractérisée en ce que le moteur à courant continu (4) est arrangé dans la boîte de vitesses (3) en travers par rapport à l'axe longitudinal de ladite boîte de vitesses (3).

4. Bicyclette selon l'une des revendications 1 à 3, caractérisée en ce que l'engrenage est exécuté sous forme d'engrenage démultiplicateur à courroie dentée, comprenant une petite poule d'entraînement (5) fixée sur l'arbre du moteur à courant continu (4), une courroie dentée d'entraînement (6) actionnant une grande poulie d'entraînement (7) sur l'arbre intermédiaire (8) de laquelle se trouve une autre poulie d'entraînement de petite taille (9) qui actionne une grande poulie d'entraînement (11) par l'intermédiaire d'une courroie dentée d'entraînement (10) et dont l'arbre de sortie (12) porte un axe libre (13) qui s'engage dans la chaîne d'entraînement (14).

5. Bicyclette selon les revendications 1 et 2, caractérisée en ce que deux supports de paliers (31; 31') dotés de paliers pour la liaison pivotante, sont arrangés sur le cadre de la bicyclette, sur la boîte de vitesses (3), à l'exterieur, sur le côté du palier du pédalier, et symétriquement par rapport à l'axe longitudinal de ladite boîte de vitesses (3).

6. Bicyclette selon les revendications 1, 2 et 5, caractérisée en ce que la liaison sur l'axe (33) de la roue à chaîne (18) sur les deux côtés d'un palier du pédalier pour l'entraînement de la bicyclette s'effectue au moyen de pédales.

7. Bicyclette selon les revendications 1, 2 et 5, caractérisée en ce que sur la boîte de vitesses (3), à l'extérieur sur le côté roue arrière, sont arrangés des éléments de centrage (34; 34') pour les longerons de fourche (19; 19') de la fourche arrière (1).

8. Bicyclette selon la revendication 7, caractérisée en ce que les longerons de fourche (19; 19') sont fixés par soudage sur la boîte de vitesses (3).

9. Bicyclette selon les revendications 1, 2, 5, 7 et 8, caractérisée en ce que les longerons de fourche (19; 19') sont des pièces frappées en tôle, de préférence des profilés sous forme de caisse à deux pièces qui sont exécutés sur le côté de la boîte de vitesses de sorte qu'ils puissent recevoir les éléments de centrage (34; 34') de ladite boîte de vitesses (3), et sur le côté de la roue arrière de sorte qu'ils puissent recevoir les éléments de centrage (35; 35') des suspensions de roue (20; 20').

10. Bicyclette selon la revendication 9, caractérisée en ce que les longerons de fourche (19; 19') sont fixés par soudage sur les suspensions de roue (20; 20').

11. Bicyclette selon la revendication 1, caractérisée en ce qu'une plaque de siège (36) est fixée dans une entaille du tube de sel le (25), ladite plaque étant dotée d'un taraudage (37) dans laquelle peut être vissée une vis sans tête (38) intégrée par vulcanisation dans l'élément de ressort (2) exécuté sous forme de ressort en caoutchouc.

Fig.1

Fig. 2

EP 0 735 966 B1

Fig. 3